# EUROPEAN PATENT SPECIFICATION

(11) **EP 3 135 969 B1**
(45) Date of publication and mention of the grant of the patent: **17.11.2021**
(21) Application number: 15782339.4
(22) Date of filing: 17.04.2015
(51) Int. Cl.: F02M 59/36, F02M 59/46, F16K 31/06, H01F 7/16

(54) **ELECTROMAGNETIC VALVE**
ELEKTROMAGNETISCHES VENTIL
VANNE ÉLECTROMAGNÉTIQUE

(30) Priority: 25.04.2014 JP 2014090818
(43) Date of publication of application: 01.03.2017
(73) Proprietor: Hitachi Astemo, Ltd., Hitachinaka-shi, Ibaraki 312-8503 (JP)
(72) Inventor: SAITO Atsuji, Hitachinaka-shi Ibaraki 312-8503 (JP); USUI Satoshi, Hitachinaka-shi Ibaraki 312-8503 (JP); YAMADA Hiroyuki, Hitachinaka-shi Ibaraki 312-8503 (JP); SUGANAMI Masayuki, Hitachinaka-shi Ibaraki 312-8503 (JP); HOHKITA Atsushi, Hitachinaka-shi Ibaraki 312-8503 (JP); SASO Yuta, Hitachinaka-shi Ibaraki 312-8503 (JP); YAGAI Masamichi, Hitachinaka-shi Ibaraki 312-8503 (JP)
(74) Representative: MERH-IP Matias Erny Reichl Hoffmann Patentanwälte PartG mbB
(86) International application number: PCT/JP2015/061773
(87) International publication number: WO 2015/163242

(56) References cited:
- EP-A1- 2 775 132
- WO-A1-2013/074592
- JP-A- 2006 307 870
- JP-A- 2013 197 433
- JP-A- 2013 197 433
- JP-A- 2013 241 952
- US-A- 4 967 966
- US-A- 5 741 002
- US-A1- 2014 001 290
- US-B1- 6 367 721

## Description

### Technical Field

The present invention relates to an electromagnetic valve that operates in liquid, and relates, for example, to an electromagnetic valve typified by a valve mechanism that controls the amount of fuel to be discharged by a high-pressure fuel supply pump for an internal-combustion engine for a vehicle or the pressure in high-pressure fuel pipes including a common rail.

### Background Art

High-pressure fuel supply pumps that increase the pressure of the fuel are widely used for direct-injection internal-combustion engines in which the fuel is directly injected to the inside of the combustion chamber among internal-combustion engines, for example, of vehicles.

JP 2006-307870 A and JP 2014-25389 A describe an electromagnetic valve that includes: a magnetic resistance increasing part that is a cylindrical non-magnetic body formed of a member separate from a fixed core; and a moveable core that is allowed to be displaced in the axial direction of the moveable core when the fixed core sucks the moveable core in the inner periphery of the magnetic resistance increasing part (see PTL 1 and PTL 2). PTL 3 relates to a fuel injection device for a direct injection engine. PTL 4 relates to an auxiliary pressure relief valve.

### Citation List

### Patent Literature

PTL 1: JP 2006-307870 A
PTL 2: JP 2014-25389 A
PTL 3: US 2014/0001290 A1
PTL 4: WO 2013/074592 A1

### Summary of Invention

### Technical Problem

However, in the conventional techniques, the inner periphery of the magnetic resistance increasing part and the outer periphery of the moveable core form a narrow gap. Thus, there is no space into which cavitation bubbles generated during the operation of the moveable core are released. This sometimes causes erosion of the moveable core and the inner wall of the moveable core chamber formed in the fixed core, depending on the operation conditions.

An objective of the present invention is to decay the cavitation occurring in a moveable core chamber of an electromagnetic valve, and reduce the occurrence of erosion.

### Solution to Problem

The objective of the present invention can be achieved by the formation of a void large enough to capture cavitation bubbles in a magnetic resistance increasing part.

The void large enough to capture cavitation bubbles can preferably be formed as a cylindrical void holding the magnetic void therein and extending on axial both sides of the core.

The structure in which the magnetic void is left when the moveable core is sucked (the structure in which the moveable core is prevented from colliding with the fixed core) can enable the magnetic void to function as a void for capturing cavitation bubbles.

Alternatively, the moveable core is provided with an axially penetrating path so that the cavitation bubbles can be released through the penetrating path into the area on a side of the moveable core opposite to the magnetic void.

The center of the fixed core facing the moveable core is provided with a cavity that communicates with the magnetic void and is configured to store a spring so that the cavity can be used for capturing the cavitation bubbles.

More specifically, the fixed core includes two parts, a cup-shaped member having a closed end and a cylindrical core part to which the valve mechanism is attached. The opened end of the cup-shaped member and the outer periphery of a surface of the cylindrical core part facing the opened end are sealed with the magnetic resistance increasing member (for example, the magnetic resistance increasing member is formed in a cylindrical shape. The cup-shaped member and an end of the cylindrical core are inserted from both ends of the magnetic resistance increasing member. The outer periphery of the magnetic resistance increasing member is irradiated with a laser so that the cup-shaped member and the magnetic resistance increasing member, and the cylindrical core and the magnetic resistance increasing member are adhered and fixed to each other.) The fixed core unit is formed and the moveable core is installed in the inside of the fixed core unit so that the moveable core can axially move. This forms a magnetic void between the moveable core and the opened end of the cup-shaped member. A void for capturing cavitation bubbles is formed as a cylindrical void holding the magnetic void therein and extending on axial both sides of the cores around the magnetic void.

Meanwhile, the outer periphery of the cup-shaped member is provided with a circular convex part. The outer periphery of the circular convex part is inserted into a first end of the magnetic resistance increasing member so that the inner peripheral surface of the magnetic resistance increasing member has contact with the outer peripheral surface of the circular convex part. Then, the magnetic resistance increasing member and the circular protrusion are fixed with a laser.

On the other hand, the outer periphery of an end of the cylindrical core facing the magnetic void is provided with a circular surface having an outer diameter identical to the outer diameter of the circular convex part provided to the outer periphery of the cup-shaped member. The circular surface is inserted into a second end of the magnetic resistance increasing member so that the inner peripheral surface of the magnetic resistance increasing member has contact with the outer periphery of the circular surface. Then, the magnetic resistance increasing member and the circular protrusion are fixed with a laser.

### Advantageous Effects of Invention

According to the invention having the structure described above, a void large enough to capture cavitation bubbles can be formed around the magnetic void in which the cavitation occurs. This formation can reduce the erosion occurring due to the cavitation.

In the specific structure, a circular void having a height of the circular convex part is formed around the magnetic void. This formation can minimize the radial dimension of the void between the inner peripheral surface of the cylindrical core and the outer peripheral surface of the moveable core (this is because the smaller the magnetic resistance between the moveable core and the cylindrical core part is, the larger the suction force is) . Meanwhile, this formation can sufficiently increase the radial dimension of the void for capturing the cavitation bubbles by increasing the outer diameter of the circular convex part.

Furthermore, an additional process for forming a path, a process for adding a protection member made of a high-strength material, and a surface process for adding a protection film are not required. Thus, the cavitation can be decayed and the occurrence of erosion can be reduced with a simple structure. As a result, the cost for the electromagnetic valve can be reduced.

### Brief Description of Drawings

[FIG. 1] FIG. 1 is a vertical cross-sectional view of a high-pressure fuel supply pump of a first embodiment in which the present invention is implemented.
[FIG. 2] FIG. 2 is another vertical cross-sectional view of the high-pressure fuel supply pump of the first embodiment in which the present invention is implemented, viewed from an angle different from FIG. 1.
[FIG. 3] FIG. 3 is a horizontal cross-sectional view of the high-pressure fuel supply pump of the first embodiment in which the present invention is implemented.
[FIG. 4] FIG. 4 is a view of the whole configuration of a high-pressure fuel supply system of the first embodiment in which the present invention is implemented.
[FIG. 5] FIG. 5 is an explanatory view of an electromagnetic valve of the first embodiment in which the present invention is implemented.

### Description of Embodiments

Hereinafter, an embodiment according to the present invention will be described.

### First Embodiment

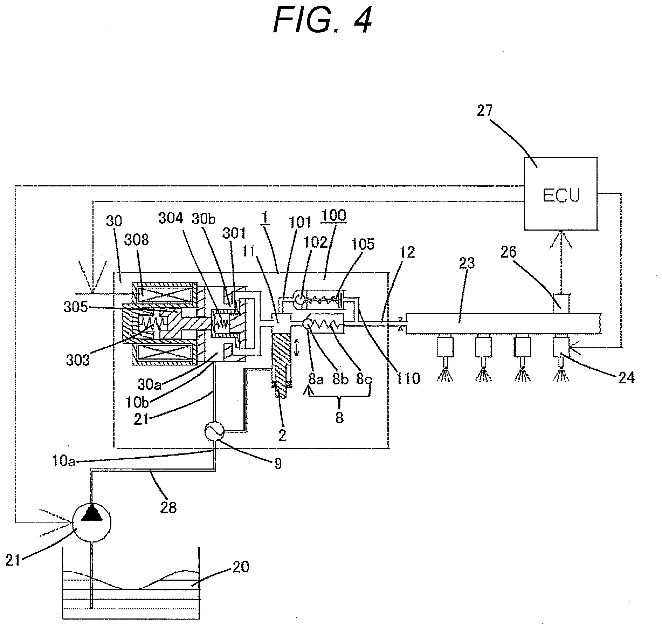

The configuration and operation of a system will be described with reference to the view of the whole configuration of the system illustrated in FIG. 4.

A part surrounded by a dashed line is the body of a high-pressure fuel supply pump (hereinafter, referred to as a high-pressure pump) . The mechanism and parts in the dashed line are integrally embedded in a high-pressure pump body 1. The fuel in a fuel tank 20 is pumped up by a feed pump 21, and fed via an intake pipe 28 to an intake joint 10a of the pump body 1.

After passing through the intake joint 10a, the fuel passes through a pressure pulsation reducing mechanism 9, and an intake path 10b, and reaches an intake port 30a of an electromagnetic inlet valve 30 included in a flow rate control mechanism. The pulsation preventing mechanism 9 will be described below.

The electromagnetic inlet valve 30 includes an electromagnetic coil 308. When the electromagnetic coil 308 does not conduct electricity, the difference between the biasing force of an anchor spring 303 and the biasing force of a valve spring 304 biases an inlet valve body 301 in a valve-opening direction in which the inlet valve body 301 is opened, and this opens the intake opening 30b. Note that the biasing force of the anchor spring 303 and the biasing force of the valve spring 304 are set so that the biasing force of the anchor spring 303 > the biasing force of the valve spring 304 holds.

When the electromagnetic coil 308 conducts electricity, a state in which an electromagnetic plunger 305 is moved to the left side of FIG. 4 and the anchor spring 303 is compressed is maintained. An inlet valve body 301 with which the tip of an electromagnetic plunger 305 coaxially has contact seals the intake opening 30b connected to a pressurizing chamber 11 of the high-pressure pump using the biasing force of the valve spring 304.

The operation of the high-pressure pump will be described hereinafter.

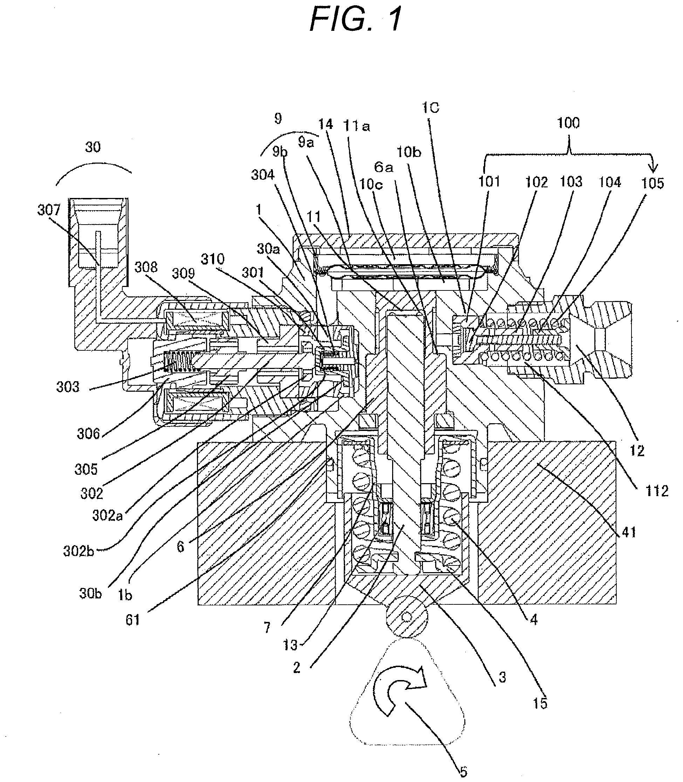

When the rotation of a cam described below displaces a plunger 2 downward in FIG. 4 and the plunger 2 is in an intake process, the volume of the pressurizing chamber 11 is increased and the fuel pressure in the pressurizing chamber 11 is decreased. In the intake process, when the fuel pressure in the pressurizing chamber 11 is reduced to a pressure lower than the pressure in the intake path 10b (the intake port 30a), the fuel passes through the opened intake opening 30b and flows into the pressurizing chamber 11. When the plunger 2 completes the intake process and moves to a compression process, the plunger 2 moves to the compression process (a state in which the plunger 2 moves upward in FIG. 1). At that time, a state in which the electromagnetic coil 308 does not conduct electricity is maintained, and thus magnetic biasing force does not act. Thus, the inlet valve body 301 is still opened by the biasing force of the anchor spring 303. The volume of the pressurizing chamber 11 decreases with the compressing motion of the plunger 2. In such a state, the fuel sucked in the pressurizing chamber 11 is returned through the opened inlet valve body 301 to the intake path 10b (the intake port 30a). Thus, the pressure in the pressurizing chamber is not increased. This process is referred to as a return process.

When a control signal from an engine control unit 27 (hereinafter, referred to as ECU) is applied to the electromagnetic inlet valve 30 in the return process, a current flows through the electromagnetic coil 308 of the electromagnetic inlet valve 30. The magnetic biasing force moves the electromagnetic plunger 305 to the left side of FIG. 4 and a state in which the anchor spring 303 is compressed is maintained. As a result, the biasing force of the anchor spring 303 does not act on the inlet valve body 301. The fluid force due to the biasing force of the valve spring 304 and the flow of the fuel into the intake path 10b (the intake port 30a) acts. This closes the inlet valve body 301 and thus closes the intake opening 30b. When the intake opening 30b is closed, the fuel pressure in the pressurizing chamber 11 starts increasing with the upward motion of the plunger 2. When the fuel pressure is larger than or equal to the pressure in a fuel outlet 12, the fuel remaining in the pressurizing chamber 11 is discharged at high pressure through a discharge valve mechanism 8, and fed to a common rail 23. This process is referred to as a discharge process.

In other words, the compression process of the plunger 2 (a process in which the plunger 2 rises from a lower starting point to an upper starting point) includes the return process and the discharge process. Controlling the timing at which the electromagnetic coil 308 of the electromagnetic inlet valve 30 conducts electricity can control the amount of the high-pressure fuel to be discharged. When the timing at which the electromagnetic coil 308 conducts electricity is hastened, the proportion of the return process is low and the proportion of the discharge process is high to the compression process. In other words, the amount of fuel to be returned to the intake path 10b (the intake port 30a) is decreased and the amount of fuel to be discharged at high pressure is increased. On the other hand, when the timing at which the electromagnetic coil 308 conducts electricity is delayed, the proportion of the return process is high and the proportion of the discharge process is low to the compression process. In other words, the amount of fuel to be returned to the intake path 10b is increased and the amount of fuel to be discharged at high pressure is decreased. The timing at which the electromagnetic coil 308 conducts electricity is controlled by the instructions from the ECU.

The configuration described above controls the timing at which the electromagnetic coil 308 conducts electricity. This can control the amount of fuel to be discharged at high pressure in accordance with the amount of fuel that the internal-combustion engine requires.

The outlet of the pressurizing chamber 11 is provided with the discharge valve mechanism 8. The discharge valve mechanism 8 includes a discharge valve seat 8a, a discharge valve body 8b, and a discharge valve spring 8c. When there is no differential pressure of fuel between the pressurizing chamber 11 and the fuel outlet 12, the discharge valve body 8b is pressed and fixed to the discharge valve seat 8a by the biasing force of the discharge valve spring 8c, and is closed. When the fuel pressure in the pressurizing chamber 11 exceeds the fuel pressure in the discharge fuel outlet 12, the discharge valve body 8b is opened against the discharge valve spring 8c and the fuel in the pressurizing chamber 11 is discharged at high pressure through the discharge fuel outlet 12 to the common rail 23.

As described above, the fuel guided to the intake joint 10a is pressurized at high pressure by the reciprocation of the plunger 2 in the pressurizing chamber 11 of the pump body 1 as much as necessary, and fed from the discharge fuel outlet 12 to the common rail 23 by the pressure.

Injectors 24 for direct injection (namely, a direct-injection injectors) and a pressure sensor 26 are attached to the common rail 23. The number of the attached direct-injection injectors 24 corresponds to the number of cylinder engines of the internal-combustion engine. The direct-injection injectors 24 open and close in accordance with the control signal from the engine control unit (ECU) 27 so as to inject the fuel in the cylinder.

The pump body 1 is further provided with a discharge flow path 110 communicating the downstream part of the discharge valve body 8b with the pressurizing chamber 11 and bypassing the discharge valve, separately from the discharge flow path. The discharge flow path 110 is provided with a pressure relief valve 102 that limits the flow of the fuel only to a direction from the discharge flow path to the pressurizing chamber 11. The pressure relief valve 102 is pressed to the pressure relief valve seat 101 by the relief spring 104 generating pressing force. The pressure relief valve body 102 is configured to move away from the pressure relief valve seat 101 and opens when the difference between the pressure in the pressurizing chamber and the pressure in the relief path is higher than or equal to a predetermined pressure.

For example, when a failure of the direct-injection injector 24 causes an excessive high pressure in the common rail 23 and the differential pressure between the discharge flow path 110 and the pressurizing chamber 11 is larger than or equal to the valve-opening pressure at which the pressure relief valve body 102 is opened, the pressure relief valve body 102 opens and the discharge flow path at the excessive high pressure is returned from the discharge flow path 110 to the pressurizing chamber 11. This protects a high-pressure pipe such as the common rail 23.

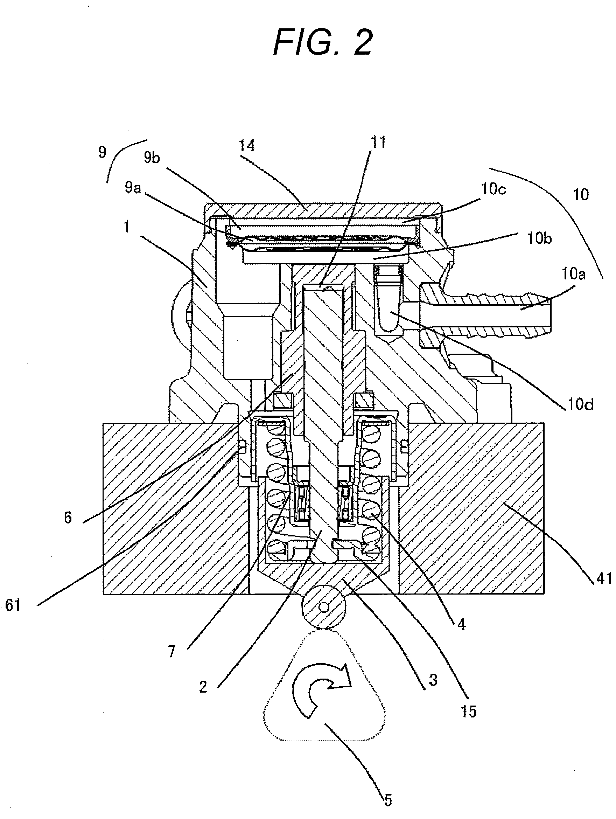

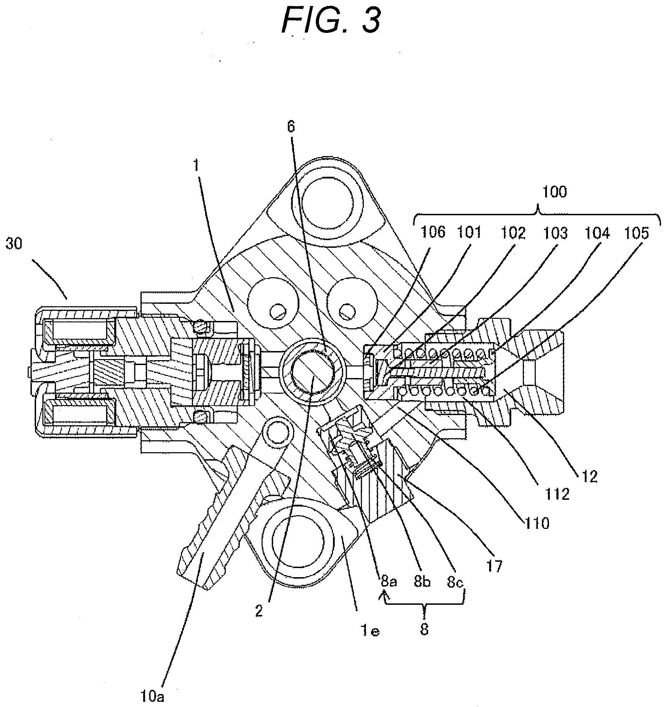

Hereinafter, the configuration and operation of the high-pressure fuel pump will be described in more detail with reference to FIGS. 1 to 4.

A general high-pressure pump is air-tightly sealed and fixed to the flat surface of a cylinder head 41 of the internal-combustion engine with a flange 1e provided to the pump body 1. An O-ring 61 is fitted to the pump body 1 so that the airtightness between the cylinder head and the pump body is retained.

A cylinder 6 is attached to the pump body 1. The cylinder 6 is formed in a cylinder with a bottom on an end so that the cylinder 6 guides the back-and-forth movement of the plunger 2 and the pressurizing chamber 11 is formed in the cylinder 6. The pressurizing chamber 11 is provided with a plurality of communication holes 11a so that the pressurizing chamber 11 communicates with the electromagnetic inlet valve 30 configured to feed the fuel and the discharge valve mechanism 8 configured to discharge the fuel from the pressurizing chamber 11 to the discharge path.

The outer diameter of the cylinder 6 includes a large-diameter part and a small-diameter part. The small-diameter part is pressed and inserted in the pump body 1. The surface of a width difference 6a between the large-diameter part and the small-diameter part is pressed and fixed to the pump body 1. This prevents the fuel pressurized in the pressurizing chamber 11 from leaking to the low-pressure side.

The lower end of the plunger 2 is provided with a tappet 3 that converts the rotation movement of a cam 5 attached to a camshaft of the internal-combustion engine into up-and-down movement, and transmits the up-and-down movement to the plunger 2. The plunger 2 is pressed and fixed to the tappet 3 through a retainer 15 with a spring 4. This can move (reciprocate) the plunger 2 up and down with the rotation movement of the cam 5.

A plunger seal 13 held on the lower end of the inner periphery of the seal holder 7 has slidably contact with the outer periphery of the plunger 2 on the lower end of the cylinder 6 in the drawing. This seals the blow-by gap between the plunger 2 and the cylinder 6 and prevents the fuel from leaking to the outside of the pump. Meanwhile, this prevents the lubricant (including engine oil) that smoothly moves a sliding part of the internal-combustion engine from leaking through the blow-by gap into the pump body 1.

The fuel sucked by the feed pump 21 is fed through the intake joint 10a coupled with the intake pipe 28 to the pump body 1.

A damper cover 14 is coupled with the pump body 1 and forms a low-pressure fuel chamber 10. The fuel passing through the inlet joint 10a flows into the low-pressure fuel chamber 10. In order to remove an obstacle such as a metal powder in the fuel, a fuel filter 10d is attached to the upstream part of the low-pressure fuel chamber 10, for example, while being pressed and inserted in the pump body 1. A pressure pulsation reducing mechanism 9 is installed in the low-pressure fuel chamber 10 so that the pressure pulsation reducing mechanism 9 reduces the spread of the pressure pulsation generated in the high-pressure pump to a fuel pipe 28. When the fuel sucked in the pressurizing chamber 11 is returned through the opened inlet valve body 301 to the intake path 10b (the intake port 30a) under a state in which the flow rate of the fuel is controlled, the fuel returned to the intake path 10b (the intake port 30a) generates the pressure pulsation in the low-pressure fuel chamber 10. However, the pressure pulsation is absorbed and reduced by the expansion and contraction of a metal damper 9a forming the pressure pulsation reducing mechanism 9 provided to the low-pressure fuel chamber 10. The metal damper 9a is formed of two corrugated metal disks of which outer peripheries are bonded together. Inert gas such as argon is injected in the metal damper 9a. Mounting hardware 9b is configured to fix the metal damper 9a on the inner periphery of the pump body 1.

The electromagnetic inlet valve 30 is a variable control mechanism that includes the electromagnetic coil 308. The electromagnetic inlet valve 30 is connected to the ECU through the terminal 307 and repeats conduction and non-conduction of electricity so as to open and close the inlet valve and control the flow rate of the fuel.

When the electromagnetic coil 308 does not conduct electricity, the biasing force of the anchor spring 303 is transmitted to the inlet valve body 301 through the electromagnetic plunger 305 and the anchor rod 302 integrally formed with the electromagnetic plunger 305. The biasing force of the valve spring 304 installed in the inlet valve body is set so that the biasing force of the anchor spring 303 > the biasing force of the valve spring 304 holds. As a result, the inlet valve body 301 is biased in a valve-opening direction in which the inlet valve body 301 is opened. The intake opening 30b is opened. Meanwhile, the anchor rod 302 has contact with the inlet valve body 301 at a part 302b (in a state illustrated FIG. 1).

The setting for the magnetic biasing force generated by the electricity conduction through the coil 308 is configured to enable the electromagnetic plunger 305 to overcome the biasing force of the anchor spring 303 and be sucked into a fixed core 306. When the coil 308 conducts electricity, the anchor 303 moves toward the fixed core 306 (the left side of the drawing) and a stopper 302a formed on an end of the anchor rod 302 has contact with an anchor rod bearing 309 and is seized. At that time, the clearance is set so that the travel distance of the anchor 301 > the travel distance of the inlet valve body 301 holds. The contact part 302b opens between the anchor rod 302 and the inlet valve body 301. As a result, the inlet valve body 301 is biased by the valve spring 304 and the intake opening 30b is closed.

The electromagnetic inlet valve 30 is fixed to the pump body 1 while an inlet valve seat 310 is hermetically inserted in a tubular boss 1b so that the inlet valve body 301 can seal the intake opening 30b to the pressurizing chamber. When the electromagnetic inlet valve 30 is attached to the pump body 1, the intake port 30a is connected to the intake path 10b.

The discharge valve mechanism 8 is provided with a plurality of discharge paths radially drilled around the sliding axis of the discharge valve body 8b. The discharge valve mechanism 8 includes a discharge valve seat member 8a and a discharge valve member 8b. The discharge valve seat member 8a is provided with a bearing that can sustain the sliding reciprocation of the discharge valve body 8b at the center of the discharge valve seat member 8a. The discharge valve member 8b has the central axis so as to slide with respect to the bearing of the discharge valve seat member 8a, and has a circular contact surface on the outer periphery. The circular contact surface can retain the airtightness by having contact with the discharge valve seat member 8a. Furthermore, a discharge valve spring 33 is inserted and held in the discharge valve mechanism 8. The discharge valve spring 33 is a coil spring that biases the discharge valve member 8b in a valve-closing direction in which the discharge valve member 8b is closed. The discharge valve seat member, for example, is pressed, inserted and held in the pump body 1. The discharge valve member 8b and the discharge valve spring 8c are further inserted in the pump body 1. A sealing plug 17 seals the pump body 1. This forms the discharge valve mechanism 8. The discharge valve mechanism 8 is formed as described above. The formation causes the discharge valve mechanism 8 to function as a check valve that controls the direction in which the fuel flows.

The operation of the pressure relief valve mechanism will be described in more detail. As illustrated, the pressure relief valve mechanism 100 includes a pressure relief valve stopper 106, the pressure relief valve body 102, the pressure relief valve seat 101, the relief spring stopper 104, and a relief spring 105. The pressure relief valve seat 103 includes a bearing that enables the pressure relief valve 102 to slide. The pressure relief valve 102 integrally including a sliding shaft is inserted in the pressure relief valve seat 103. After that the position of the relief spring stopper 104 is determined so that the relief spring 105 has a desired load, and the relief spring stopper 104 is fixed to the pressure relief valve body 102, for example, by press and insertion. The valve-opening pressure at which the pressure relief valve body 102 is opened is determined depending on the pressing force of the relief spring 104. The pressure relief valve stopper 106 is inserted between the pump body 1 and the pressure relief valve seat 101, so as to function as a stopper that controls how much the pressure relief valve body 102 is opened.

The pressure relief valve mechanism 100 unitized as described above is fixed to the pump body 1 by the press and insertion of the pressure relief valve seat 101 to the inner peripheral wall of a cylindrical pass-through slot 1C provided to the pump body 1. Subsequently, the fuel outlet 12 is fixed so that the fuel outlet 12 blocks the cylindrical pass-through slot 1C of the pump body 1 so as to prevent the fuel from leaking from the high-pressure pump to the outside. Meanwhile, the fuel outlet 12 enables the pressure relief valve mechanism 100 to be connected to a common rail. The relief spring 105 is provided to a side of the pressure relief valve body 102 facing the fuel outlet 12 as described above. This prevents the volume of the pressurizing chamber 11 from increasing even when the outlet of the pressure relief valve 102 of the pressure relief valve mechanism 100 is opened to the pressurizing chamber 11.

When the motion of the plunger 2 starts decreasing the volume of the pressurizing chamber 11, the pressure in the pressurizing chamber increases with the decrease in volume. When the pressure in the pressurizing chamber finally exceeds the pressure in the discharge flow path 110, the discharge valve mechanism 8 is opened and the fuel is discharged from the pressurizing chamber 11 to the discharge flow path 110. From the moment the discharge valve mechanism 8 is opened to the time immediately after the opening, the pressure in the pressurizing chamber overshoots and becomes very high. The very high pressure propagates in the discharge flow path and the pressure in the discharge flow path simultaneously overshoots. If the outlet of the pressure relief valve mechanism 100 is connected to the intake flow pass 10b at the overshoot, the overshoot of the pressure in the discharge flow path causes the pressure difference between the inlet and outlet of the pressure relief valve 102 to exceed the valve-opining pressure at which the pressure relief valve mechanism 100 is opened. This causes an error in the pressure relief valve. In light of the foregoing, the outlet of the pressure relief valve mechanism 100 of the embodiment is connected to the pressurizing chamber 11, and thus the pressure in the pressurizing chamber acts on the outlet of the pressure relief valve mechanism 100 and the pressure in the discharge flow path 110 acts on the inlet of the pressure relief valve mechanism 100. The pressure overshoot occurs simultaneously in the pressurizing chamber and the discharge flow path. Thus, the pressures difference between the inlet and outlet of the pressure relief valve does not exceed the valve-opining pressure at which the pressure relief valve is opened. In other words, an error in the pressure relief valve does not occur.

When the motion of the plunger 2 starts increasing the volume of the pressurizing chamber 11, the pressure in the pressurizing chamber decreases with the increase in volume. When the pressure in the pressurizing chamber falls below the pressure in the intake path 10b (the intake port 30a), the fuel flows from the intake path 10b (the intake port 30a) into the pressurizing chamber 11. When the motion of the plunger 2 starts decreasing the volume of the pressurizing chamber 11 again, the fuel is pressurized at high pressure and discharged due to the mechanism described above.

Next, an example in which failure of the direct-inj ection injector 24 generates an excessive high pressure in the common rail 23 will be described in detail.

In the event of failure of the direct-injection injector, in other words, when the injection function of the direct-injection injector stops and the direct-injection injector does not feed the fuel fed in the common rail 23 into the combustion chamber of the internal-combustion engine, the fuel accumulates between the discharge valve mechanism 8 and the common rail 23. This causes an excessive high pressure of the fuel. When the fuel pressure moderately increases to the excessive high pressure, the pressure sensor 26 provided to the common rail 23 detects the abnormal pressure. Then, the electromagnetic inlet valve 30 that is a flow rate control mechanism provided in the intake path the intake path 10b (the intake port 30a) is controlled by feedback control. The feedback control operates as a safety function to decrease the amount of the fuel to be discharged. However, the feedback control with the pressure sensor is not effective in dealing with an instantaneous excessive high pressure. When the electromagnetic inlet valve 30 is out of order and keeps the maximum flow rate in an operation state in which the fuel is not required so much, the pressure at which the fuel is discharged excessively increases. In such a case, the excessive high pressure is not dissolved because of the failure of the flow rate control mechanism even when the pressure sensor 26 of the common rail 23 detects the excessive high pressure.

When the excessive high pressure described above occurs, the pressure relief valve mechanism 100 of the embodiment functions as a safety valve.

When the motion of the plunger 2 starts increasing the volume of the pressurizing chamber 11, the pressure in the pressurizing chamber decreases with the increase in volume. When the pressure in the inlet of the pressure relief valve mechanism 100, namely, in the discharge flow path is higher than or equal to the pressure in the outlet of the pressure relief valve, namely, in the pressurizing chamber 11 by the valve-opening pressure at which the pressure relief valve mechanism 100 is opened, the pressure relief valve mechanism 100 is opened and returns the fuel at an excessive high pressure in the common rail to the pressurizing chamber. This return prevents the fuel pressure from being higher than or equal to a predetermined pressure even when an excessive high pressure occurs. This prevention protects the high-pressure pipe system including the common rail 23.

In the present embodiment, the mechanism described above prevents the pressure difference between the inlet and outlet of the pressure relief valve mechanism 100 from being higher than or equal to the valve-opening pressure at which the pressure relief valve mechanism 100 is opened, and thus, the pressure relief valve mechanism 100 is not opened in the discharge process.

In the intake process and the return process, the fuel pressure in the pressurizing chamber 11 decreases to a low pressure identical to the pressure in the intake pipe 28. On the other hand, the pressure in the relief chamber 112 increases to a pressure identical to the pressure in the common rail 23. When the differential pressure between the relief chamber 112 and the pressurizing chamber is higher than or equal to the valve-opening pressure at which the pressure relief valve 102 is opened, the pressure relief valve 102 is opened and the fuel at an excessive high pressure is returned from the relief chamber 112 to the pressurizing chamber 11. This protects the high-pressure pipe system including the common rail 23.

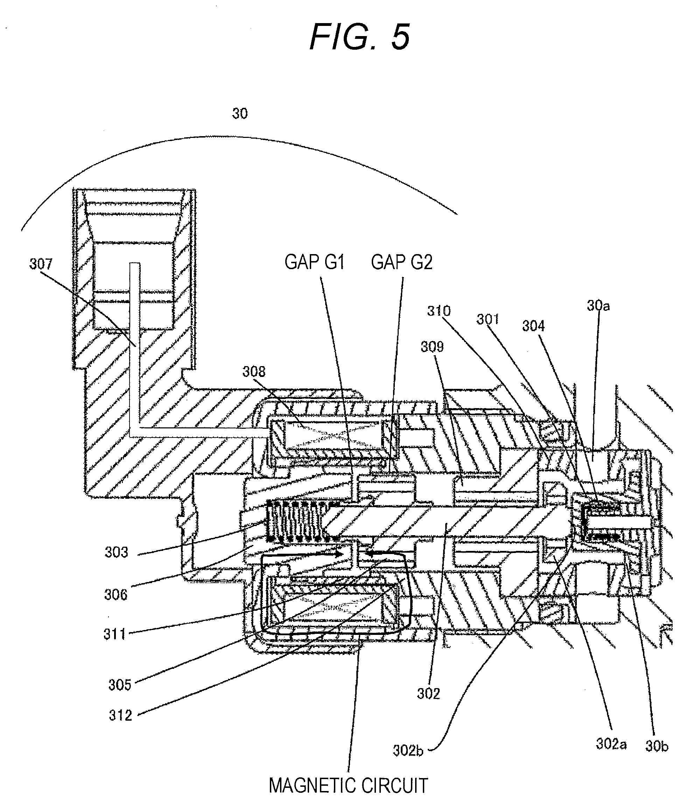

Next, the configuration of the electromagnetic inlet valve will be described in more detail with reference to FIG. 5.

In the electromagnetic valve described in the embodiment, a void large enough to capture cavitation bubbles is formed in the magnetic resistance increasing part.

The void large enough to capture cavitation bubbles can be preferably formed as a cylindrical void holding the magnetic void therein and extending on axial both sides of the electromagnetic valve around the magnetic void.

The structure in which the magnetic void is left when the moveable core 305 is sucked (the structure in which the moveable core 305 is prevented from colliding with the fixed core 306) enables the magnetic void to function as a void for capturing cavitation bubbles.

Furthermore, the moveable core 305 is provided with an axially penetrating path so that the cavitation bubbles can be released through the penetrating path into the area on a side of the moveable core 305 opposite to the magnetic void.

The center of the fixed core 306 facing the moveable core is provided with a cavity that communicates with the magnetic void and is configured to store the spring. This cavity is used to capture cavitation bubbles.

More specifically, the fixed core 306 is formed in a cup shape having a closed end. The fixed core 306 includes two parts, the cap-shaped part and a cylindrical core 312 to which the valve mechanism is attached.

The side edge of the opened end of the cup-shaped part of the fixed core 306 is inserted from a first end of the cylindrical magnetic resistance increasing member 311. The outer periphery of the magnetic resistance increasing member 311 is irradiated with a laser so that the cup-shaped part of the fixed core 306 and the magnetic resistance increasing member 311 are sealed and fixed. The side edge of the cylindrical core 312 opposite to the valve mechanism is inserted from a second end of the cylindrical magnetic resistance increasing member 311. The outer periphery of the magnetic resistance increasing member 311 is irradiated with a laser so that the cylindrical core 312 and the magnetic resistance increasing member 311 are adhered and fixed to each other. This forms a fixed core unit.

The moveable core 305 is installed in the fixed core unit so that moveable core 305 can axially move. This forms a magnetic void between the moveable core 305 and the opened end of the fixed core 306.

A void for capturing cavitation bubbles is formed as a cylindrical void that holds the magnetic void therein and extends to axial both sides of the cores around the magnetic void.

Especially, in the embodiment, the outer periphery of the fixed core 306 is provided with the circular convex part. The outer periphery of the circular convex part is inserted into the first end of the magnetic resistance increasing member 311 so that the inner peripheral surface of the magnetic resistance increasing member 311 has contact with the outer peripheral surface of the circular convex part. Then, the magnetic resistance increasing member 311 and the circular protrusion are fixed with a laser.

On the other hand, the outer periphery of the side edge of the cylindrical core 312 facing the magnetic void is provided with a circular surface having an outer diameter identical to the outer diameter of the circular convex part provided to the outer periphery of the cup-shaped member. The circular surface is inserted into the second end of the magnetic resistance increasing member 311 so that the inner peripheral surface of the magnetic resistance increasing member 311 has contact with the outer periphery of the circular surface . Then, the magnetic resistance increasing member 311 and the circular protrusion are fixed with a laser.

According to the embodiment having the structure described above, a void large enough to capture cavitation bubbles can be formed around the magnetic void in which the cavitation occurs. This formation can reduce the erosion occurring due to the cavitation.

According to the specific structure, a circular void having a height of the circular convex part is formed around the magnetic void. This formation can minimize the radial dimension of the void between the inner peripheral surface of the cylindrical core and the outer peripheral surface of the moveable core (this is because the smaller the magnetic resistance between the moveable core and the cylindrical core part is, the larger the suction force is). Meanwhile, this formation can sufficiently increase the radial dimension of the void for capturing the cavitation bubbles by increasing the outer diameter of the circular convex part.

Furthermore, an additional process for forming a path, a process for adding a protection member made of a high-strength material, and a surface process for adding a protection film are not required. Thus, the cavitation can be decayed and the occurrence of erosion can be reduced with a simple structure. As a result, the cost for the electromagnetic valve can be reduced.

Hereinafter, the embodiment will be described in more detail with reference to FIG. 5.

The fixed core 306 and the cylindrical core 312 forming a magnetic path are included in the inner periphery of a coil 308. When the coil 308 conducts electricity, an electromagnetic plunger 305 is magnetically sucked into the fixed core 306. To efficiently exert the suction force, the magnetic resistance increasing part 311 is connected between the fixed core 306 and the cylindrical core 312 so that many magnetic field lines of the magnetic flux pass through the electromagnetic plunger 305 and the fixed core. The magnetic resistance increasing part 311 is made of a material having a magnetic force weaker than the magnetic forces of the fixed core 306, the cylindrical core 312, and the electromagnetic plunger 305. A cylindrical void is deliberately provided between the electromagnetic plunger 305 and the magnetic resistance increasing part 311. The void is referred to as a gap G1. The cylindrical void between the electromagnetic plunger 305 and the cylindrical core 312 is referred to as a gap G2. The gaps G1 and G2 are set so that G1 > G2 holds. The cavitation bubbles generated with the operation of the electromagnetic plunger 305 are captured and decayed in the gap G1. This reduces the occurrence of erosion around the gap G1.

### Reference Signs List

- 1: pump body
- 1C: cylindrical pass-through slot of the pump body 1
- 1e: flange
- 2: plunger
- 3: tappet
- 4: spring
- 5: cam
- 6: cylinder
- 6a: width difference between large-diameter part and small-diameter part
- 7: seal holder
- 8: discharge valve mechanism
- 8a: discharge valve seat
- 8b: discharge valve body
- 8c: discharge valve spring
- 9: pressure pulsation reducing mechanism
- 9a: metal damper
- 9b: mounting hardware
- 10: low-pressure fuel chamber
- 10a: intake joint
- 10b: intake path
- 10c: damper chamber
- 10d: fuel filter
- 100: pressure relief valve mechanism
- 101: pressure relief valve seat
- 102: pressure relief valve body
- 103: pressure relief valve body guide
- 104: relief spring stopper
- 105: relief spring
- 106: pressure relief valve stopper
- 11: pressurizing chamber
- 11a: communication hole
- 110: discharge path
- 12: fuel outlet
- 13: plunger seal
- 14: damper cover
- 15: retainer
- 17: sealing plug
- 20: fuel tank
- 21: feed pump
- 23: common rail
- 24: direct-injection injector
- 26: pressure sensor
- 27: engine control unit (ECU)
- 28: intake pipe
- 30: electromagnetic inlet valve
- 30a: intake port
- 30b: intake opening
- 301: inlet valve body
- 302: anchor rod (moveable core)
- 302a: stopper unit of the anchor rod 302
- 302b: contact part in which the anchor rod 302 has contact withthe inlet valve body 301
- 303: anchor spring
- 304: valve spring
- 305: electromagnetic plunger
- 306: fixed core
- 307: terminal
- 308: electromagnetic coil
- 309: anchor rod bearing
- 310: inlet valve seat
- 311: magnetic resistance increasing member
- 312: cylindrical core
- G1: gap that is a cylindrical void between the electromagneticplunger 305 and the magnetic resistance increasing part 311
- G2: gap that is a cylindrical void between the electromagneticplunger 305 and the cylindrical core 312
- 41: cylinder head
- 61: O-ring

## Claims

1. An electromagnetic valve comprising:
a fixed core (306) having a closed end and forming a magnetic circuit in an inner periphery of an electromagnetic coil (308); and
a moveable core (302) configured to be sucked to the fixed core (306) and allowed to be axially displaced,
wherein a magnetic void is formed between the moveable core (302, 305) and a suction surface of the fixed core (306) to which the moveable core (302, 305) is sucked,
a magnetic resistance increasing part (311) is provided around the magnetic void,
the magnetic resistance increasing part (311) is formed of a member different from the fixed core (306) and the moveable core (302, 305), and
a cylindrical void is provided at the magnetic resistance increasing part (311), and the cylindrical void surrounds the magnetic void and extends axially on both sides of the fixed core (306) and the moveable core (302, 305),
wherein a center of the fixed core (306) facing the moveable core (302) is provided with a cavity communicating with the magnetic void, wherein the magnetic void is configured to store a spring,
**characterized in that** the moveable core (302) is configured to be sucked into the fixed core (306).

2. The electromagnetic valve according to claim 1, further comprising:
a cylindrical core (312) holding the magnetic resistance increasing part (311), the cylindrical core (312) being formed on a side facing the fixed core (306), wherein
a cylindrical void (G1) formed between an outer periphery of the moveable core (302, 305) and an inner periphery of the magnetic resistance increasing part (311) is larger than a cylindrical void (G2) formed between the outer periphery of the moveable core (302, 305) and an inner periphery of the cylindrical core (312) in size.

3. The electromagnetic valve according to claim 1, wherein
a volume of a cylindrical gap formed among the inner periphery of the magnetic resistance increasing part (311), the cylindrical core (312), the fixed core (306), and the outer periphery of the moveable core (302, 305) is larger than a volume determined in accordance with a maximum diameter of the moveable core (302, 305) and a maximum displacement distance of the moveable core (302).

## Patentansprüche

1. Elektromagnetisches Ventil, das Folgendes umfasst:
einen feststehenden Kern (306), der ein geschlossenes Ende aufweist und in einem Innenumfang einer elektromagnetischen Spule (308) einen Magnetkreis bildet; und
einen beweglichen Kern (302), der konfiguriert ist, zum feststehenden Kern (306) gesaugt zu werden, und der axial verlagert werden kann,
wobei zwischen dem beweglichen Kern (302, 305) und einer Saugfläche des feststehenden Kerns (306) ein magnetischer Hohlraum gebildet ist, in den der bewegliche Kern (302, 305) gesaugt wird,
eine Komponente (311) zum Erhöhen eines magnetischen Widerstands um den magnetischen Hohlraum vorgesehen ist,
die Komponente (311) zum Erhöhen eines magnetischen Widerstands aus einem Element gebildet ist, das vom feststehenden Kern (306) und vom beweglichen Kern (302, 305) verschieden ist, und
ein zylindrischer Hohlraum an der Komponente (311) zum Erhöhen eines magnetischen Widerstands vorgesehen ist und der zylindrische Hohlraum den magnetischen Hohlraum umgibt und sich auf beiden Seiten des feststehenden Kerns (306) und des beweglichen Kerns (302, 305) axial erstreckt,
wobei eine Mitte des feststehenden Kerns (306), die dem beweglichen Kern (302) zugewandt ist, mit einem Hohlraum versehen ist, der mit dem magnetischen Hohlraum in Verbindung steht, wobei der magnetische Hohlraum konfiguriert ist, eine Feder aufzunehmen,
**dadurch gekennzeichnet, dass** der bewegliche Kern (302) konfiguriert ist, in den feststehenden Kern (306) gesaugt zu werden.

2. Elektromagnetisches Ventil nach Anspruch 1, das ferner Folgendes umfasst:
einen zylindrischen Kern (312), der die Komponente (311) zum Erhöhen eines magnetischen Widerstands hält, wobei der zylindrische Kern (312) auf einer Seite gebildet ist, die dem feststehenden Kern (306) zugewandt ist, wobei
ein zylindrischer Hohlraum (G1), der zwischen einem Außenumfang des beweglichen Kerns (302, 305) und einem Innenumfang der Komponente (311) zum Erhöhen eines magnetischen Widerstands gebildet ist, größer ist als ein zylindrischer Hohlraum (G2), der zwischen dem Außenumfang des beweglichen Kerns (302, 305) und einem Innenumfang des zylindrischen Kerns (312) gebildet ist.

3. Elektromagnetisches Ventil nach Anspruch 1, wobei
ein Volumen eines zylindrischen Spalts, der zwischen dem Innenumfang der Komponente (311) zum Erhöhen eines magnetischen Widerstands, dem zylindrischen Kern (312), dem feststehenden Kern (306) und dem Außenumfang des beweglichen Kerns (302, 305) gebildet ist, größer ist als ein Volumen, das in Übereinstimmung mit einem maximalen Durchmesser des beweglichen Kerns (302, 305) und einem maximalen Verlagerungsabstand des beweglichen Kerns (302) bestimmt wird.

## Revendications

1. Vanne électromagnétique comprenant :
un noyau fixe (306) ayant une extrémité fermée et formant un circuit magnétique dans une périphérie intérieure d'une bobine électromagnétique (308) ; et
un noyau mobile (302) configuré pour être aspiré sur le noyau fixe (306) et autorisé à être déplacé de manière axiale,
dans lequel un vide magnétique est formé entre le noyau mobile (302, 305) et une surface d'aspiration du noyau fixe (306) sur lequel le noyau mobile (302, 305) est aspiré,
une partie d'augmentation de résistance magnétique (311) est prévue autour du vide magnétique,
la partie d'augmentation de résistance magnétique (311) est formée d'un élément différent du noyau fixe (306) et du noyau mobile (302, 305), et
un vide cylindrique est prévu au niveau de la partie d'augmentation de résistance magnétique (311), et le vide cylindrique entoure le vide magnétique et s'étend axialement sur les deux côtés du noyau fixe (306) et du noyau mobile (302, 305),
dans lequel un centre du noyau fixe (306) faisant face au noyau mobile (302) est doté d'une cavité communiquant avec le vide magnétique, le vide magnétique étant configuré pour stocker un ressort,
**caractérisée en ce que** le noyau mobile (302) est configuré pour être aspiré jusque dans le noyau fixe (306).

2. Vanne électromagnétique selon la revendication 1, comprenant en outre :
un noyau cylindrique (312) maintenant la partie d'augmentation de résistance magnétique (311), le noyau cylindrique (312) étant formé sur un côté faisant face au noyau fixe (306), dans laquelle
un vide cylindrique (G1) formé entre une périphérie extérieure du noyau mobile (302, 305) et une périphérie intérieure de la partie d'augmentation de résistance magnétique (311) est supérieur en taille à un vide cylindrique (G2) formé entre la périphérie extérieure du noyau mobile (302, 305) et une périphérie intérieure du noyau cylindrique (312).

3. Vanne électromagnétique selon la revendication 1, dans laquelle un volume d'un entrefer cylindrique formé parmi la périphérie intérieure de la partie d'augmentation de résistance magnétique (311), le noyau cylindrique (312), le noyau fixe (306), et la périphérie extérieure du noyau mobile (302, 305) est supérieur à un volume déterminé en accord avec un diamètre maximum du noyau mobile (302, 305) et une distance de déplacement maximum du noyau mobile (302).
